# EUROPEAN PATENT APPLICATION

(11) **EP 0 536 990 A1**
(43) Date of publication of application: **14.04.1993**
(21) Application number: 92309129.2
(22) Date of filing: 07.10.1992
(51) Int. Cl.: B60P 3/04, B62D 33/04

(54) **Intermediate deck for a vehicle and vehicle comprising intermediate deck**

(30) Priority: 08.10.1991 GB 9121311; 01.11.1991 GB 9123190
(71) Applicant: RICE TRAILERS LIMITED, Cosby, Leicester LE9 5TG (GB)
(72) Inventor: Slennett,Christopher,David,, Fyfield,Essex CM5 OPL (GB)
(74) Representative: Lally, William

(57) **Abstract**

A vehicle for the transportation of livestock comprises a deck structure (4) to divide the interior of the vehicle into two superposed compartments, for use in the transportation e.g. of small animals. The deck structure comprises parallel rails in the form of a channel structure (6) secured to the opposite side walls of the vehicle, extending generally the full length of the vehicle, at an intermediate height. Located in a front wall of the vehicle at the height of the channel (6) is a slot (8), and extending through the slot (8), and supported by the channel (6), is a deck assembly comprising a plurality of rigid support members (10) connected together in a parallel array for relative articulation. Mounted on the forward exterior of the vehicle is a storage means (20) comprising an axle (22) around which a deck assembly may be rolled. When not in use, the deck assembly will be rolled primarily around the axle (22), and when required for use, the deck assembly is withdrawn from the storage means, being pulled through the slot (8), and supported by the channels (6). When in its fully drawn out position, a bolt may be operated to engage the deck assembly, preventing it from being returned.

## Description

### Description of the Invention

This invention is concerned with improvements relating to the transportation of livestock, in particular to the provision of an intermediate deck in a vehicle, such as a lorry or trailer, in which livestock is to be transported.

Livestock trailers are currently designed so that they can be fitted with an intermediate deck so that the trailer can be used for carrying two loads of smaller animals, such as sheep or pigs, the intermediate deck being removed when the trailer is used for carrying larger animals, such as cattle or horses.

A currently available intermediate deck comprises timber baulks which are rested on batons or rails which run horizontally down each side of the trailer on the inside. This causes considerable difficulty, including:
[a] the baulks are conventional made of thick wood, and are heavy even when new, and become even heavier in use as the wood becomes wet either from animal waste or when the decks are steamed cleaned;
[b] difficulty is encountered in the storage of the baulks when the intermediate decks is not being used: if they are stored inside the vehicle, this takes up additional room, and if they are not stored with the vehicle, there can be difficulty in them not being available when required.

According to this invention there is provided an intermediate deck for a vehicle, the intermediate deck comprising:
[a] supporting means comprising at least two rails or channels, which may be secured within the vehicle in spaced relationship, extending lengthwise of the vehicle;
[b] a deck assembly comprising a plurality of rigid support members connected together in a parallel array for relative articulation; and
[c] storage means within which the deck assembly may be stored when not in use.

Preferably the support members are elongate, and provide surfaces affording in use a floor or deck for the vehicle. Preferably the support members are secured together for relative articulation in a plane extending at rights angles to their length, conveniently but not necessarily by adjacent support members being connected together for relative articulative movement over extensive regions of their length.

Preferably the supporting members are of metal, e.g. aluminum section, preferably adjacent members being connected together for relative pivotal movement. Preferably the supporting members carry at their end regions rollers engageable within the channel or trackway, or sliders of plastics material.

Advantageously the storage means is for mounting exteriorly of the vehicle, conveniently at the forward end, whereby the deck assembly may be drawn through a slot in a front wall of the vehicle provided adjacent to the rails, whereby the deck assembly may be drawn from the storage means into the interior of the vehicle for use.

Preferably the storage means comprises automatic means to roll up the deck assembly, such as a spring torsion device.

Preferably locking means is provided to retain the deck assembly in its drawn out position at the rear, and advantageously also at the front.

According to this invention there is provided a vehicle for the transportation of livestock, comprising guide rails extending lengthwise of the vehicle at an intermediate heightwise location, for widthwise support of a deck assembly comprising a plurality of support members connected together in a parallel array for relative articulation, storage means being provided on the front of the vehicle from which the deck assembly may be drawn for use and in which the deck assembly may be stored when not in use.

There will now be given a detailed description, to be read with reference to the accompanying drawing, of a livestock trailer which is a preferred embodiment of the invention, having been selected for the purposes of illustrating the invention by way of example.

In the accompanying drawings:
FIGURE 1 is a schematic vertical sectional view of the preferred embodiment;
FIGURE 2 is an enlarged schematic view, illustrating part of a deck assembly of the vehicle;
FIGURE 3 is a view from the rear of the vehicle;
FIGURE 4 is an enlarged view of part of Figure 3; and
FIGURES 5 and 6 are views, corresponding to Figures 1 and 2, of a modified form of the preferred embodiment.

The vehicle 2 which is the preferred embodiment of the invention is for the transportation of livestock and comprises a deck structure 4 to divide the interior of the vehicle into two, superposed compartments, for use in the transportation of small animals.

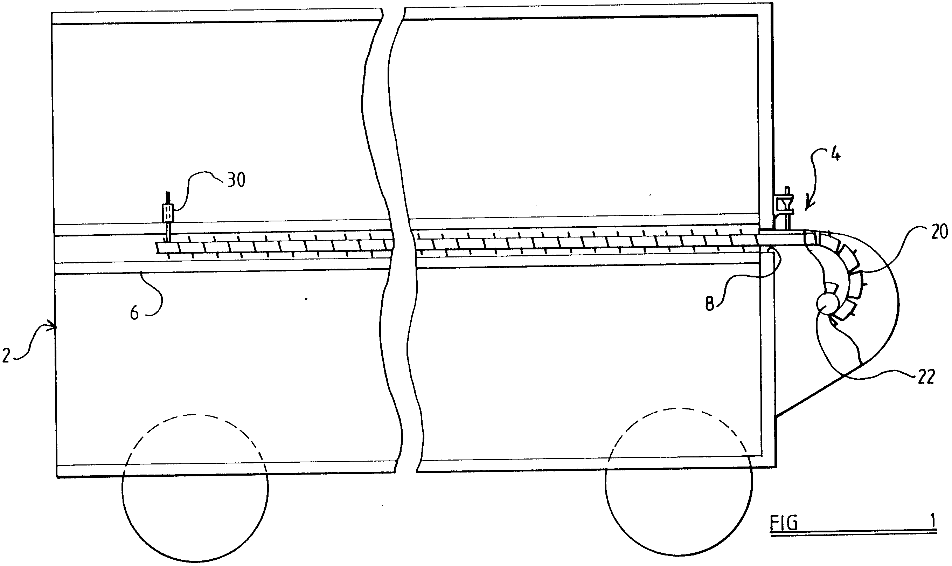

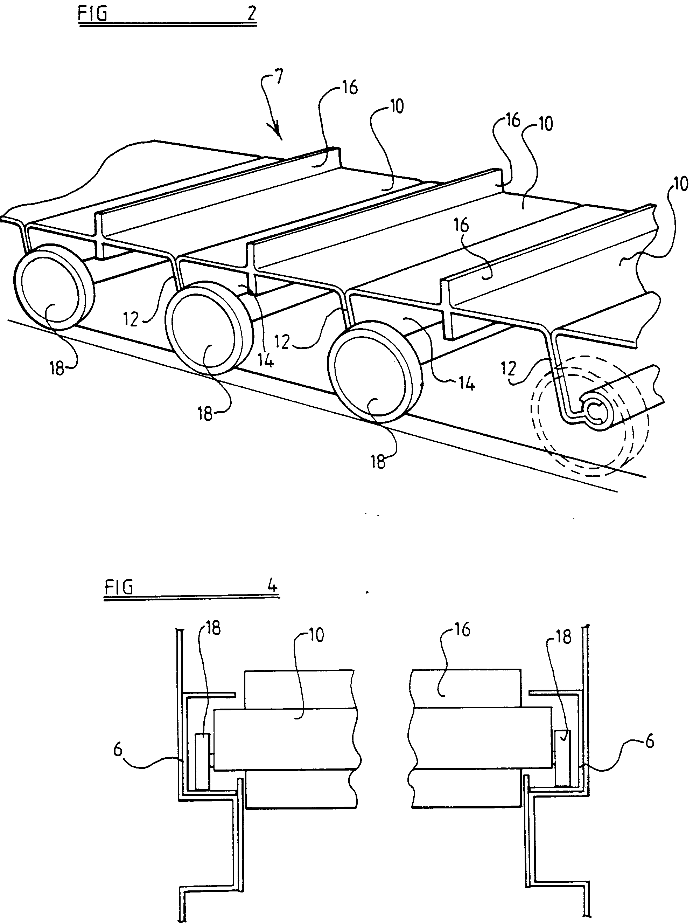

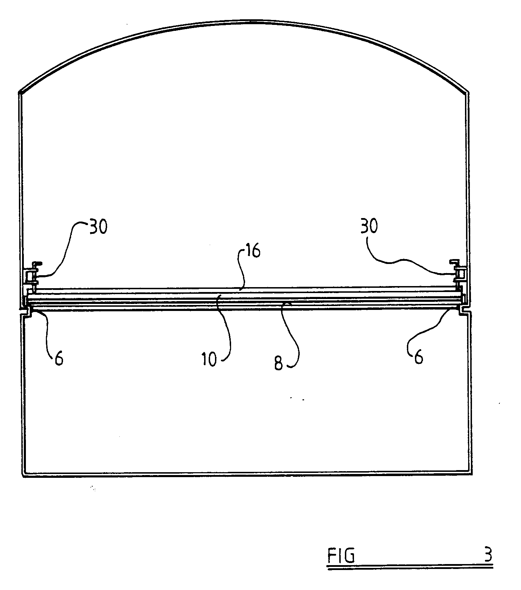

The deck structure comprises parallel rails in the form of a channel structure 6 secured to the opposite side walls of the vehicle, extending generally the full length of the vehicle, at an intermediate height. Located in a front wall of the vehicle at the height of the channels 6 is a slot 8. Extending through the slot 8, and supported by the channels 6, is a deck assembly 7 comprising a plurality of rigid support members 10 of aluminium section, each comprising a rear limb 12 pivotally connected to a forward limb 14 of the next adjacent member 10 (see Figure 2). Connected conveniently to the pivotal mounting of each adjacent pair of support members 10 is a roller 18, which is received within the channel 6 on each side of the vehicle, as is shown in Figure 3. Ribs 16 are provided extending lengthwise of each of the support members 10, to improve the grip and reduce the tendency for small animals to slip on the upper surface of the deck, and to strengthen the members against flexing.

Mounted on the forward exterior of the vehicle is a storage means 20 of the deck structure, comprising an axle 22, around which the deck assembly may be rolled, the axle 22 preferably being provided with spring return means (not shown) to urge the axle in a clockwise direction. When not in use, the deck assembly will be rolled primarily around the axle 22, conveniently a terminal portion being located adjacent to the slot 8 in the front wall of the vehicle.

When required for use, the deck assembly is withdrawn from the storage means 20, i.e. being pulled to the left, as seen in Figure 1, opposite sides of the support members extending between and being supported by the channels 6. When in its fully drawn out position, a rear spring-loaded bolt 30 may be operated in engage the deck assembly, and preventing it from being returned. A ramp may be engaged through the open rear end of the vehicle with the deck assembly, enabling animals to walk up onto the deck assembly for transportation. A barrier means may then be secured to the deck assembly at its rear end. When use has been concluded, the bolt 30 may be retracted, and the deck assembly allowed to return to its storage position, around the axle 22, detritus including animal waste falling from the supporting members as they pass through the vertical orientation. However if desired the deck assembly may be conveniently be hosed down as it is returned to the storage means.

By the use of the invention a roll back deck may be provided which may conveniently be stored without intruding into the working space of the vehicle, and may be deployed for use and returned to its stored position very quickly and very conveniently.

It is of course to be appreciated that the profile of the horizontal slats may be varied, as may be the method of joining together adjacent slats for pivotal movement. Thus, adjacent slats may be rivetted to strips of flexible webbing, to afford sufficient longitudinal flexibility to enable the deck to be coiled up.

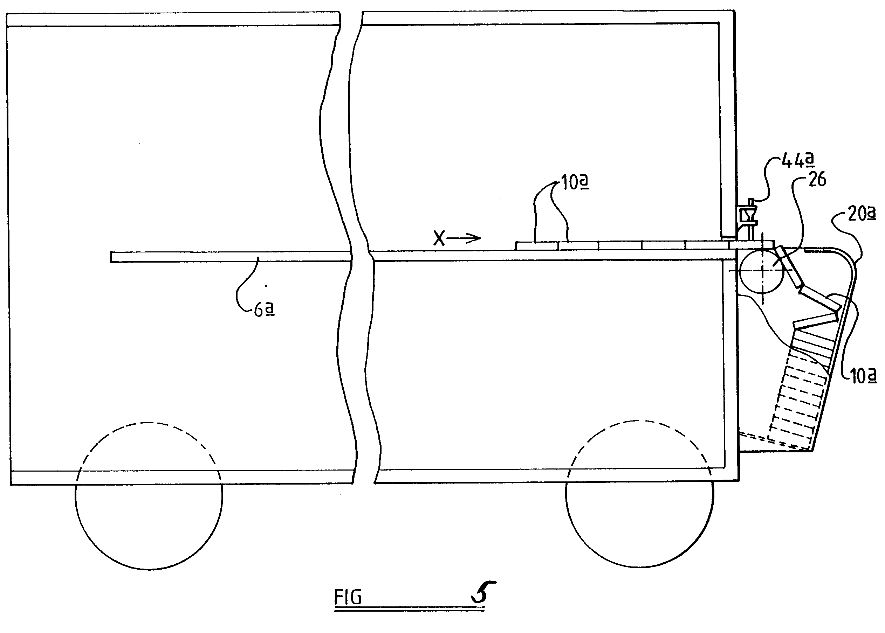

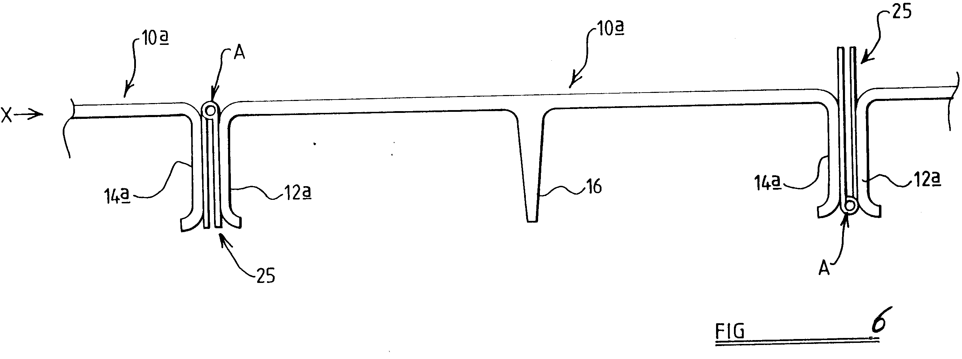

The modified construction is illustrated in Figures 4 and 5, in which similar numerals with the suffix a are used for parts similar to those of the embodiment illustrated in Figures 1 to 3.

In the modified construction the deck assembly comprises a plurality of rigid support members 10a, each comprising a rear limb 12a pivotally connected to a forward limb 14a of the next adjacent member 10a. Intermediate ribs 16a are provided, extending lengthwise of each support member 20a (i.e. transverse to the length of the deck).

Adjacent deck members 10a are pivotally connected by such as piano hinges 25, providing axes A which alternate between upper and lower locations, Figure 5, enabling the deck assembly to be stacked in an accordion pleat, as is shown in Figure 4.

Thus the deck assembly may be drawn from the storage means 20a, conveniently over an idler roller assembly 26, between the rail assembly 6a, the deck assembly when being fully drawn out being secured in position by a forward lock 4, 4a and a rear lock (not shown). On return of the deck assembly to the stacked position, the locks are released, and the deck assembly is pushed in the forward direction (in the direction of the arrow X, Figure 4), the springs 25 aiding a stacking of the adjacent deck members into the accordion pleat configuration, as is shown in Figure 4.

Whilst the invention is described above in relation to the transportation of animals, it is to be appreciated that the invention may be utilised where similar or analogous circumstances arise.

The features disclosed in the foregoing description, or the accompanying drawings, expressed in their specific forms or in the terms or means for performing the desired function, or a method or process for attaining the disclosed result, may, separately or in any combination of such features, be utilised for realising the invention in diverse forms thereof.

## Claims

1. An intermediate deck for a vehicle, the intermediate deck comprising
(a) supporting means comprising at least two rails or channels (6) which may be secured within the vehicle in spaced relationship, extending lengthwise of the vehicle;
(b) a deck assembly (7) comprising a plurality of rigid support members (10) connected together in a parallel array for relative articulation; and
(c) storage means (20) within which the deck assembly 17 may be stored when not in use.

2. An intermediate deck according to Claim 1 wherein the support members (10) are elongate, and provide surfaces affording in use a floor or deck for the vehicle.

3. An intermediate deck according to Claim 2 wherein the support members are secured together for articulation in a plane extending at right angles to their length.

4. An intermediate deck according to Claim 3 wherein said support members (10) are connected together for relative articulative movement over extensive regions of their length.

5. An intermediate deck according to any one of the preceding claims wherein the supporting members (10) are of metal.

6. An intermediate deck according to any one of the preceding claims wherein adjacent supporting members (10) are connected together for relative pivotal movement, advantageously the support members carrying at their end regions rollers engageable within the channel or trackway (6), or with sliders of plastics material.

7. An intermediate deck according to any one of the preceding claims wherein the storage means (20) is mounted exteriorally of the vehicle, such as at a forward end, whereby the deck assembly may be drawn through a slot in a front wall of the vehicle adjacent to the rails, whereby the deck assembly may be drawn from the storage means (20) into the interior of the vehicle for use.

8. An intermediate deck according to any one of the preceding claims wherein the storage means (20) comprises automatic means to roll up the deck assembly.

9. An intermediate deck according to any one of the preceding claims comprising locking means (30) to retain the deck assembly in its drawn out position.

10. A vehicle for the transportation of livestock comprising side rails (6) extending lengthwise of the vehicle at an intermediate heightwise location, for widthwise support of a deck assembly (7) comprising a plurality of support members (10) connected together in parallel array or relative articulation, storage means (20) being provided at the front of the vehicle from which the deck assembly may be drawn and in which the deck assembly may be stored when not in use.
